# EUROPÄISCHE PATENTSCHRIFT

(11) **EP 0 515 977 B1**
(45) Veröffentlichungstag und Bekanntmachung des Hinweises auf die Patenterteilung: **03.01.1996**
(21) Anmeldenummer: 92108556.9
(22) Anmeldetag: 21.05.1992
(51) Int. Cl.: H05B 41/29

(54) **Vorschaltgerät für Hochdruckgasentladungslampen in Kraftfahrzeugen**
Electronic ballast for high pressure discharge lamps used in automotive applications
Ballast électronique pour lampe à décharge haute-pression utilisée dans l'automobile

(30) Priorität: 29.05.1991 DE 4117589
(43) Veröffentlichungstag der Anmeldung: 02.12.1992
(73) Patentinhaber: Hella KG Hueck & Co., D-59552 Lippstadt (DE)
(72) Erfinder: Daub, Wolfgang, W-4780 Lippstadt (DE)

(56) Entgegenhaltungen:
- WO-A-91/02442
- DE-A- 4 002 334
- US-A- 4 563 719
- US-A- 4 943 886

## Beschreibung

Die Erfindung betrifft ein Vorschaltgerät für Hochdruck-Gasentladungslampen in Kraftfahrzeugen, das aus einer Fahrzeugbatterie gespeist wird, wobei das Vorschaltgerät mindestens einen Spannungswandler aufweist, der mit der Fahrzeugbatterie und der Fahrzeugmasse verbunden ist, der eine Lampenversorgungsspannung und/oder eine Zündhilfsspannung erzeugt und elektrisch leitend mit einer Zündeinrichtung zum Zünden und Betreiben von Hochdruck-Gasentladungslampen verbunden ist.

Aus der deutschen Patentschrift DE 34 45 817 C2 ist ein Vorschaltgerät bekannt, das eine Schaltungsanordnung zum Betrieb einer Hochdruck-Gasentladungslampe an einer Niedervolt-Gleichspannung aufweist. Das Vorschaltgerät weist dabei mindestens einen Spannungswandler auf, der mit der Fahrzeugbatterie und der Fahrzeugmasse verbunden ist. Der mindestens eine Spannungswandler erzeugt eine Lampenversorgungsspannung und/oder eine Zündhilfsspannung und ist elektrisch leitend mit einer Zündeinrichtung zum Zünden und Betreiben von Hochdruck-Gasentladungslampen verbunden. Bei dem hier gezeigten Ausführungsbeispiel, das sehr aufwendig und kostenintensiv ist, ist ein Speisespannungs-Vorregler, der einen DC/DC-Wandler aufweist, über einen Transistorwechselrichter, einen Gleichrichter und einen NF-Rechteckwechselrichter mit der Zündeinrichtung einer Wechselstrom-Hochdruck-Gasentladungslampe verbunden. Die Schaltungsanordnung weist zudem eine überwachungselektronik auf, mit der ein Abweichen der Versorgungsspannung aus einem vorgegebenen Fensterbereich detektiert werden kann und bei einem derartigen Abweichen das Vorschaltgerät abschaltet. Zudem weist die Überwachungselektronik einen Verpolungsschutz auf.

Bei dem Betrieb des Vorschaltgeräts weisen die Verbindungsleitungen zwischen den einzelnen Komponenten und insbesondere die Verbindungsleitungen zu dem Zündgerät hohe Spannungen auf, die für Personen, die diese Leitungen berühren, gefährlich werden können. Personen können z. B. bei dem Versuch, Reparaturarbeiten vorzunehmen, in Kontakt zu den Leitungen geraten oder aber auch mit diesen Leitungen in Kontakt geraten, wenn z. B. durch einen Unfall des Kraftfahrzeugs diese im Scheinwerferbereich oder in dem Motorraum des Kraftfahrzeugs frei gelegt worden sind. Bei der vorbekannten Schaltungsanordnung erweist sich dabei als nachteilig, daß Personen, die spannungsführende Teile des Vorschaltgerätes berühren, nicht gegen Spannungsschläge geschützt sind, so daß eine hohe Gefährdung für diese Personen besteht.

Aus der US-A-4 943 886 ist eine Schaltungsanordnung bekannt, die dazu geeignet ist, Entladungslampen zu betreiben. Die Schaltungsanordnung ist mit einer Eingangsspannung verbunden, die mittels eines Spannungswandlers in eine Spannung zum Betreiben einer Last gewandelt wird. Zwischen dem Spannungswandler und der Last ist ein Transformator angeordnet, der für eine galvanische Trennung zwischen der Last und dem Spannungswandler sorgt. Die Last ist über einen niederohmigen Widerstand mit der Masse der Eingangsspannung verbunden. Bei der Anwendung einer solchen Schaltung in einem Kraftfahrzeug erweist sich als nachteilig, daß diese auf den Betrieb an einer Eingangsspannung ausgelegt ist, die eine Wechselspannung ist. Somit weist diese Schaltungsanordnung keine Mittel auf, um die in Kraftfahrzeugen üblichen Schwankungen der Batteriespannung auszugleichen oder zu berücksichtigen. Als besonders nachteilig erweist es sich hierbei, daß die galvanische Trennung in der Spannungsversorgung erst zwischen der Last und dem Spannungswandler erfolgt und die Spannungen zum Zünden und Betreiben der Entladungslampe nicht getrennt von der Eingangsspannung erzeugt werden, so daß, falls die Eingangsspannung eine stark schwankende Gleichspannung wie von einer Fahrzeugbatterie ist, minimale Fehlerströme nicht detektiert werden können.

Der Erfindung liegt die Aufgabe zugrunde, ein Vorschaltgerät für Hochdruck-Gasentladungslampen in Kraftfahrzeugen zu schaffen, bei dem Personen, die spannungsführende Teile des Vorschaltgerätes berühren, bestmöglich geschützt werden und bei dem das Vorschaltgerät bei dem Auftreten von Fehlern wie Kurzschlüssen oder überströmen sicher geschützt wird.

Die Aufgabe wird durch die Merkmale des Anspruchs 1 gelöst.

Es ist von Vorteil, daß die Lampenversorgungsspannung und/oder die Zündhilfsspannung durch den Spannungswandler von der Batteriespannung der Fahrzeugbatterie galvanisch getrennt erzeugt werden und daß das Bezugspotential der Zündhilfsspannung und/oder der Lampenversorgungsspannung über einen niederohmigen ersten Meßwiderstand mit der Fahrzeugmasse verbunden ist, weil somit auf einfache und kostengünstige Weise aufgrund des Spannungsabfalls an dem niederohmigen ersten Meßwiderstand, der mit dem Bezugspotential des Vorschaltgerätes verbunden ist, selbst minimale Fehlerströme gemessen und bestimmt werden können, die z. B. auftreten, wenn eine Person eines der spannungsführenden Teile des Vorschaltgerätes berührt.

Eine derartige einfache und kostengünstige Fehlerstromerkennung kann eine hohe Sicherheit bei dem Betrieb von Vorschaltgeräten für Hochdruck-Gasentladungslampen in Kraftfahrzeugen bieten, wenn aus dem Spannungsabfall an dem niederohmigen ersten Meßwiderstand ein Fehlerstromsignal zum Abschalten des Vorschaltgerätes erzeugt wird. Durch die galvanische Trennung der Batteriespannung von den Ausgangsspannungen des Spannungswandlers wird dabei sichergestellt, daß über den niederohmigen ersten Meßwiderstand mit hoher Sicherheit geringe Fehlerströme erkannt werden können. Eine galvanische Trennung kann dabei durch Verwendung einer entsprechenden Transformatoranordnung erreicht werden.

Es ist von Vorteil, daß der Meßwiderstand elektrisch leitend mit einer Sicherheitseinrichtung verbunden ist, daß die Sicherheitseinrichtung eine Fehlerstromermittlungseinrichtung aufweist, daß die Sicherheitseinrichtung eine Auswerte- und Schalteinrichtung aufweist, die ein Abschaltsignal erzeugt, wenn die Fehlerstromermittlungseinrichtung einen vorgegebenen Fehlerstrom ermittelt und daß die Sicherheitseinrichtung elektrisch leitend mit dem Spannungswandler verbunden ist, weil somit auf besonders einfache Weise bei dem Vorliegen eines Spannungsabfalls an dem niederohmigen ersten Meßwiderstand ein Fehlerstrom ermittelt werden kann und dieser ermittelte Fehlerstrom je nach Größe dazu verwendet werden kann, daß die Spannungsversorgung durch den Spannungswandler aufgrund des erzeugten Abschaltsignals unterbrochen wird und somit das gesamte Vorschaltgerät abgeschaltet wird, was zu einer großen Sicherheit, insbesondere für Personen führt, die spannungsführende Teile des Vorschaltgerätes berühren. Die Fehlerströme, die zu einem Abschalten des Vorschaltgeräts durch die Sicherheitseinrichtung führen, können dabei beispielhaft etwa eine Größenordnung von 20 bis 30 mA aufweisen. Je nach Anwendung können diese Werte auch größer oder kleiner sein.

Dadurch, daß in der Verbindung zwischen dem Spannungswandler und der Zündeinrichtung, die das Bezugspotential aufweist, ein zweiter Meßwiderstand angeordnet ist, ergibt sich auf einfache und kostengünstige Weise die Möglichkeit, den bei dem Betrieb der Hochdruck-Gasentladungslampe auftretenden Lampenstrom aufgrund des Spannungsabfalls an dem zweiten Meßwiderstand zu bestimmen.

In diesem Zusammenhang erweist sich als besonders vorteilhaft, daß die Verbindung zwischen dem zweiten Meßwiderstand und der Zündeinrichtung elektrisch leitend mit der Sicherheitseinrichtung verbunden ist und daß die Sicherheitseinrichtung eine Lampenstromermittlungseinrichtung aufweist, die mit der Auswerte- und Schalteinrichtung verbunden ist, wodurch auf einfache und kostengünstige Weise der bei dem Betrieb der Hochdruck-Gasentladungslampe und auch bei dem Starten der Hochdruck-Gasentladungslampe auftretende Lampenstrom mit hoher Sicherheit bestimmt werden kann. Durch die Messung und Ermittlung des Lampenstroms können somit auch Fehler in dem Lampenstrom leicht und zuverlässig erkannt werden, die z. B. durch Kurzschlüsse zwischen den Leitungen entstehen können. Bei solchen Fehlern erzeugt die Auswerte- und Schalteinrichtung der Sicherheitseinrichtung ebenso wie bei dem Auftreten von Fehlerströmen ein Abschaltsignal, das dem Spannungswandler zugeführt wird und diesen und damit das gesamte Vorschaltgerät abschaltet, wodurch sich eine hohe Sicherheit bei dem Betrieb des Vorschaltgerätes ergibt.

Es ist von Vorteil, daß in der Verbindung zwischen dem Spannungswandler und der Zündeinrichtung, die die Zündhilfsspannung leitet, ein dritter Meßwiderstand angeordnet ist, weil somit auf einfache und kostengünstige Weise aufgrund des Spannungsabfalls an dem dritten Meßwiderstand der Zündstrom zuverlässig bestimmt werden kann.

In diesem Zusammenhang ist es besonders vorteilhaft, daß die Verbindung zwischen dem dritten Meßwiderstand und der Zündeinrichtung mit der Sicherheitseinrichtung verbunden ist und daß die Sicherheitseinrichtung eine Zündstromermittlungseinrichtung aufweist, die mit der Auswerte- und Schalteinrichtung verbunden ist, weil somit auf einfache und kostengünstige Weise besonders zuverlässig der Zündstrom bei dem Starten der Hochdruck-Gasentladungslampe bestimmt werden kann, und bei Fehlern des Zündstroms, die z. B. durch Kurzschlüsse bedingt sein können, durch die Auswerte- und Schalteinrichtung ein Abschaltsignal erzeugt werden kann, das von der Sicherheitseinrichtung dem Spannungswandler zugeführt wird und zu einer Abschaltung des Spannungswandlers und damit des Zündgerätes führt, was eine hohe Sicherheit bei dem Betrieb des Vorschaltgerätes ergibt.

Es ist von Vorteil, daß der Spannungswandler ein DC/DC-Wandler mit galvanischer Trennung der Ein- und Ausgangsspannungen ist, daß der DC/DC-Wandler eine zweite Ausgangsklemme aufweist, an der die Lampenversorgungsspannung anliegt, daß der DC/DC-Wandler eine dritte Ausgangsklemme aufweist, an der die Zündhilfsspannung anliegt, daß der DC/DC-Wandler eine erste Ausgangsklemme aufweist, die das Bezugspotential für die Lampenversorgungsspannung und die Zündhilfsspannung aufweist und daß die erste Ausgangsklemme mit dem ersten Meßwiderstand und der Fehlerstromermittlungseinrichtung der Sicherheitseinrichtung verbunden ist, weil somit ein besonders einfach aufgebautes und kostengünstig herstellbares Vorschaltgerät zum Betreiben von Hochdruck-Gasentladungslampen vorliegt, bei dem schon geringe Berührungsströme, die aus dem gemessenen Spannungsabfall an dem ersten Meßwiderstand durch die Fehlerstromermittlungseinrichtung bestimmt werden, ein zuverlässiges Abschalten des Vorschaltgerätes bewirken.

Dadurch, daß die zweite Ausgangsklemme mit einer Lampenspannungsermittlungseinrichtung der Sicherheitseinrichtung verbunden ist, kann auf einfache und kostengünstige Weise die Lampenspannung durch die Sicherheitseinrichtung auf Fehler überprüft und ein möglicher Kurzschluß erfaßt werden.

Dadurch, daß die dritte Ausgangsklemme mit einer Zündhilfsspannungsermittlungseinrichtung der Sicherheitseinrichtung verbunden ist, ergibt sich der Vorteil, daß die Zündhilfsspannung einfach und kostengünstig auf Fehler überprüft werden kann.

Durch die Messung von Lampenspannung, Lampenstrom, Zündhilfsspannung und Zündstrom ergibt sich zudem der Vorteil, daß diese Meßwerte zum Regeln oder Steuern des Zündverhaltens und/oder des Betriebs der Hochdruck-Gasentladungslampe auf einfache Weise mitbenutzt werden können.

Es ist von Vorteil, daß in der Verbindung zwischen dem DC/DC-Wandler und der Zündeinrichtung ein Wechselrichter angeordnet ist, weil somit auf einfache und kostengünstige Weise eine Wechselstrom-Hochdruck-Gasentladungslampe von dem Vorschaltgerät mit hoher Zuverlässigkeit betrieben werden kann.

Es ist von Vorteil, daß der Spannungswandler ein Wechselrichter ist, wodurch bei Verzicht auf die Verwendung eines DC/DC-Wandlers ein besonders einfacher Aufbau zum Betreiben einer Wechselstrom-Hochdruck-Gasentladungslampe erreicht wird.

Es ist von Vorteil, daß das von der Sicherheitseinrichtung erzeugte Abschaltsignal das gesamte Vorschaltgerät dauerhaft bis zum nächsten Einschaltversuch abschaltet, weil somit sichergestellt wird, daß bei dem Vorliegen eines vorgegebenen Fehlerstroms oder eines Fehlers in der Lampenspannung, in der Zündhilfsspannung, in dem Zündstrom oder in dem Lampenstrom jede Gefährdung von Personen durch spannungsführende Teile ausgeschlossen wird und zudem sichergestellt wird, daß Bauteile des Vorschaltgerätes, z. B. bei dem Vorliegen von Kurzschlüssen, nicht zerstört werden.

Es ist von Vorteil, daß die Zündeinrichtung über ein abgeschirmtes Kabel mit dem Spannungswandler verbunden ist, wodurch sich ein zuverlässiger, sicherer Aufbau des Vorschaltgerätes ergibt, wenn die Zündeinrichtung mit der Hochdruck-Gasentladungslampe räumlich getrennt von dem übrigen Vorschaltgerät angeordnet ist und eine gute Abschirmung von Störstrahlen erreicht wird.

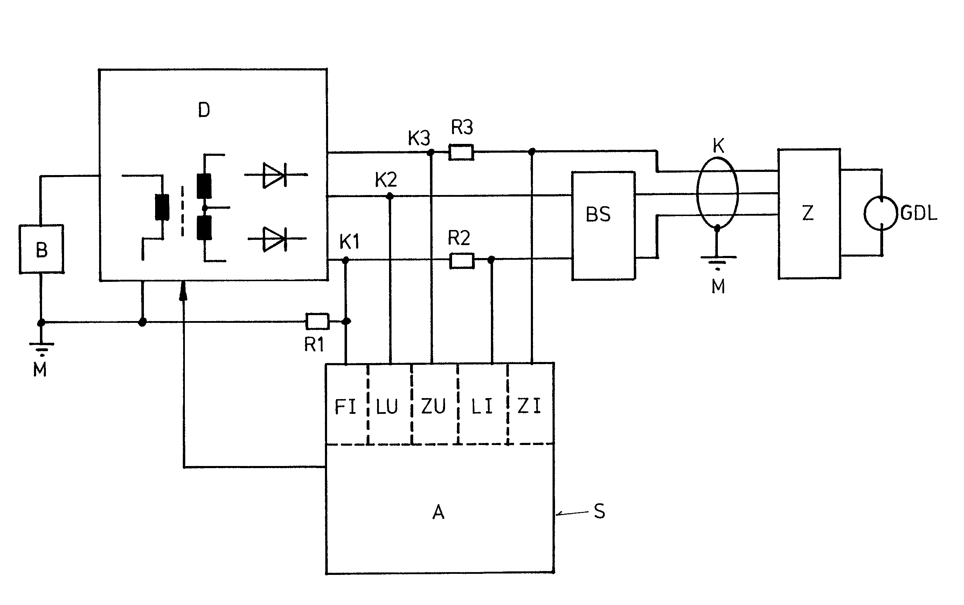

Ein Ausführungsbeispiel des Erfindungsgegenstands ist in der einzigen Zeichnung dargestellt und wird im folgenden anhand dieser Zeichnung näher beschrieben.

Das hier gewählte Ausführungsbeispiel bezieht sich auf ein Vorschaltgerät zum Betreiben einer Wechselstrom-Hochdruck-Gasentladungslampe in Kraftfahrzeugen. Das Vorschaltgerät wird dabei aus der Fahrzeugbatterie (B) gespeist. Bei dem hier vorliegenden Ausführungsbeispiel ist ein DC/DC-Wandler (D) elektrisch leitend mit der Fahrzeugbatterie (B) und der Fahrzeugmasse (M) des Kraftfahrzeugs verbunden. Der DC/DC-Wandler (D) erzeugt aus der Batteriespannung der Fahrzeugbatterie (B) eine Lampenversorgungsspannung, die an der zweiten Ausgangsklemme (K2) anliegt und erzeugt hier beispielhaft aus der Spannung der Fahrzeugbatterie (B) eine Zündhilfsspannung, die an der dritten Ausgangsklemme (K3) anliegt. Die erste Ausgangsklemme (K1) des DC/DC-Wandlers (D) liefert das Bezugspotential für die Zündhilfsspannung und die Lampenversorgungsspannung.

Der DC/DC-Wandler (D) ist hier über die dritte Ausgangsklemme (K3), an der die Zündhilfsspannung anliegt, elektrisch leitend mit einer Zündeinrichtung (Z) verbunden, die aus der anliegenden Zündhilfsspannung eine Zündspannung bildet, die geeignet ist, die Hochdruck-Gasentladungslampe (GDL), die an die Zündeinrichtung (Z) angeschlossen ist, zu zünden.

Bei dem hier gewählten Ausführungsbeispiel wird die Lampenversorgungsspannung, die an der zweiten Ausgangsklemme (K2) anliegt, einem Wechselrichter (BS), der hier als ein Brückenschalter (BS) ausgebildet ist, zugeführt, der zudem über die erste Ausgangsklemme (K1) mit dem DC/DC-Wandler (D) verbunden ist. Dieser Brückenschalter (BS) ist z. B. dann erforderlich, wenn die zu betreibende Hochdruck-Gasentladungslampe (GDL) eine Wechselstrom-Hochdruck-Gasentladungslampe (GDL) ist. Der Brückenschalter (BS) ist hier über die Zündeinrichtung (Z) mit der Hochdruck-Gasentladungslampe (GDL) verbunden. Werden von einem Vorschaltgerät mehrere Hochdruck-Gasentladungslampen (GDL) z. B. alternativ betrieben oder ist die mindestens eine Zündeinrichtung (Z) räumlich getrennt von dem übrigen Vorschaltgerät angeordnet, so kann die Zündeinrichtung (Z) über ein abgeschirmtes Kabel (K) mit dem DC/DC-Wandler (D) und/oder dem Brückenschalter (BS) verbunden sein. Das abgeschirmte Kabel (K) ist dabei mit der Fahrzeugmasse (M) verbunden.

Die erste Ausgangsklemme (K1) des DC/DC-Wandlers (D) ist elektrisch leitend über einen niederohmigen ersten Meßwiderstand (R1) mit der Fahrzeugmasse (M) verbunden. Die erste Ausgangsklemme (K1) ist zudem mit einer Fehlerstromermittlungseinrichtung (FI) einer Sicherheitseinrichtung (S) verbunden. Werden spannungsführende Teile des Vorschaltgerätes berührt, so fließt ein Fehlerstrom über die Fahrzeugmasse (M) und den ersten Meßwiderstand (R1). An dem niederohmigen ersten Meßwiderstand (R1) fällt eine Spannung ab und die Fehlerstromermittlungseinrichtung (FI) bestimmt zu diesem Spannungsabfall den entsprechenden Fehlerstrom. Eine Auswerte- und Schalteinrichtung (A) der Sicherheitseinrichtung (S) wertet den gemessenen Fehlerstrom aus und erzeugt ein Abschaltsignal, wenn der Fehlerstrom einen vorgegebenen Wert übersteigt. Der vorgegebene Wert kann dabei bei beispielhaft etwa 20 bis 30 mA liegen, was zu einem sehr großen Berührungsschutz und einer sehr großen Sicherheit für Personen führt, die spannungsführende Teile des Vorschaltgerätes berühren. Die Sicherheitseinrichtung (S) ist elektrisch leitend mit dem DC/DC-Wandler (D) verbunden und führt diesem das Abschaltsignal derart zu, daß der DC/DC-Wandler (D) abgeschaltet wird und somit das gesamte Vorschaltgerät dauerhaft abgeschaltet wird bis es erneut eingeschaltet wird. Eine Messung derart niedriger Fehlerströme ist nur möglich und auch nur mit einer derart hohen Sicherheit durchzuführen, wenn die an den Ausgangsklemmen (K1, K2, K3) erzeugten Ausgangsspannungen galvanisch getrennt von der Spannungsversorgung durch die Fahrzeugbatterie (B) erzeugt worden sind. Hierzu kann z. B. ein entsprechend aufgebauter Transformator dienen, der in der Zeichnung innerhalb des Bauteils, das den DC/DC-Wandler (D) darstellt, angedeutet ist. Entsprechend der Zeichnung weist der DC/DC-Wandler (D) zudem noch Gleichrichter auf.

Der niederohmige erste Meßwiderstand (R1) kann beispielhaft einen Widerstandswert von etwa 1 Ohm aufweisen. Der Widerstandswert ist dabei jedoch je nach Anwendung unterschiedlich zu wählen.

Um z. B. Kurzschlüsse zwischen den Leitungen zur Lampenversorgung erfassen zu können, die zu Fehlfunktionen des Vorschaltgerätes und zur Zerstörung von Teilen des Vorschaltgerätes führen können, ist hier in der Verbindung zwischen der ersten Ausgangsklemme (K1) und dem Brückenschalter (BS) ein zweiter Meßwiderstand (R2) angeordnet. Die Verbindung zwischen dem zweiten Meßwiderstand (R2) und dem Brückenschalter (BS) ist elektrisch leitend mit einer Lampenstromermittlungseinrichtung (LI) der Sicherheitseinrichtung (SI) verbunden, die wiederum mit der Auswerte- und Schalteinrichtung (A) der Sicherheitseinrichtung (S) verbunden ist, um bei einem z. B. vorliegenden Kurzschluß oder bei Fehlern im Lampenstrom ein Abschaltsignal für den DC/DC-Wandler (D) zu erzeugen.

Um z. B. Fehler in dem Zündstrom oder Kurzschlüsse zwischen den Leitungen zur Lampenversorgung feststellen zu können, ist zwischen der dritten Ausgangsklemme (K3) und der Zündeinrichtung (Z) ein dritter Meßwiderstand (R3) angeordnet. Die Verbindung zwischen dem dritten Meßwiderstand (R3) und der Zündeinrichtung (Z) ist elektrisch leitend mit einer Zündstromermittlungseinrichtung (ZI) der Sicherheitseinrichtung (S) verbunden und ist mit der Auswerte- und Schalteinrichtung (A) der Sicherheitseinrichtung (S) zur Erzeugung eines Abschaltsignals für den DC/DC-Wandler (D) verbunden, wenn z. B. ein Kurzschluß oder ein Fehler in dem Zündstrom vorliegt.

Die zweite Ausgangsklemme (K2) des DC/DC-Wandlers (D) ist elektrisch leitend zur Ermittlung der Lampenversorgungsspannung mit einer Lampenspannungsermittlungseinrichtung (LU) der Sicherheitseinrichtung (S) verbunden und ebenfalls an die Auswerte- und Schalteinrichtung (A) angeschlossen. Zur Ermittlung der Zündhilfsspannung ist eine Zündhilfsspannungsermittlungseinrichtung (ZU) der Sicherheitseinrichtung (S) elektrisch leitend sowohl mit der dritten Ausgangsklemme (K3) als auch mit der Auswerte-und Schalteinrichtung (A) verbunden.

Werden durch die Fehlerstromermittlungseinrichtung (FI) und/oder die Lampenspannungsermittlungseinrichtung (LU) und/oder die Zündhilfsspannungsermittlungseinrichtung (ZU) und/oder die Lampenstromermittlungseinrichtung (LI) und/oder die Zündstromermittlungseinrichtung (ZI) Meßwerte ermittelt, die von vorgegebenen in der Auswerte- und Schaltwerteeinrichtung (A) z. B. gespeicherten Werte abweichen, so erzeugt die Auswerte- und Schalteinrichtung (A) der Sicherheitseinrichtung (S) Abschaltsignale, die hier den DC/DC-Wandler (D) derart ansteuern, daß dieser abgeschaltet wird und das gesamte Vorschaltgerät dauerhaft bis zum nächsten Einschalten außer Betrieb setzt.

Bei anderen Ausführungsbeispielen können die ermittelten Meßwerte insbesondere dazu dienen, die Lampenleistung des Vorschaltgerätes in Abhängigkeit von unterschiedlichen Parametern wie z. B. Einschaltzeiten, Kaltstart, Heißstart und Lampentemperatur zu steuern und/oder zu regeln.

Bei anderen Ausführungsbeispielen kann z. B. auf die Verwendung des Brückenschalters (BS) verzichtet werden, wenn die anzusteuernde Hochdruck-Gasentladungslampe (GDL) eine Gleichstrom-Hochdruck-Gasentladungslampe (GDL) ist.

Bei einem anderen Ausführungsbeispiel zur Ansteuerung einer Wechselstrom-Hochdruck-Gasentladungslampe (GDL) kann der DC/DC-Wandler (D) auch durch einen Wechselrichter (BS) oder einen DC/AC-Wandler (BS) ersetzt werden. Auch in diesem Fall kann auf einen zusätzlichen Brückenschalter (BS) verzichtet werden.

Die Zündeinrichtung (Z) kann in bekannter Weise sowohl als ein überlagerungszündgerät oder ein Resonanzzündgerät ausgebildet sein.

## Patentansprüche

1. Vorschaltgerät für Hochdruck-Gasentladungslampen in Kraftfahrzeugen, das aus einer Fahrzeugbatterie (B) gespeist wird, wobei das Vorschaltgerät mindestens einen Spannungswandler (D, BS) aufweist, der mit der Fahrzeugbatterie (B) und der Fahrzeugmasse (M) verbunden ist, der eine Lampenversorgungsspannung und/oder eine Zündhilfsspannung erzeugt und elektrisch leitend mit einer Zündeinrichtung (Z) zum Zünden und Betreiben von Hochdruck-Gasentladungslampen (GDL) verbunden ist, dadurch gekennzeichnet, daß die Lampenversorgungsspannung und/oder die Zündhilfsspannung durch den Spannungswandler (D, BS) von der Batteriespannung der Fahrzeugbatterie (B) galvanisch getrennt erzeugt werden, daß das Bezugspotential der Zündhilfsspannung und/oder der Lampenversorgungsspannung über einen niederohmigen ersten Meßwiderstand (R1) mit der Fahrzeugmasse (M) verbunden ist, daß der Meßwiderstand (R1) elektrisch leitend mit einer Sicherheitseinrichtung (S) verbunden ist, daß die Sicherheitseinrichtung (S) eine Fehlerstromermittlungseinrichtung (FI) aufweist, daß die Sicherheitseinrichtung (S) eine Auswerte- und Schalteinrichtung (A) aufweist, die ein Abschaltsignal erzeugt, wenn die Fehlerstromermittlungseinrichtung (FI) einen vorgegebenen Fehlerstrom ermittelt und daß die Sicherheitseinrichtung (S) elektrisch leitend mit dem Spannungswandler (D, BS) verbunden ist.

2. Vorschaltgerät nach Anspruch 1, dadurch gekennzeichnet, daß in der Verbindung zwischen dem Spannungswandler (D, BS) und der Zündeinrichtung (Z), die das Bezugspotential aufweist, ein zweiter Meßwiderstand (R2) angeordnet ist.

3. Vorschaltgerät nach Anspruch 2, dadurch gekennzeichnet, daß die Verbindung zwischen dem zweiten Meßwiderstand (R2) und der Zündeinrichtung (Z) elektrisch leitend mit der Sicherheitseinrichtung (S) verbunden ist und daß die Sicherheitseinrichtung (S) eine Lampenstromermittlungseinrichtung (LI) aufweist, die mit der Auswerte- und Schalteinrichtung (A) verbunden ist.

4. Vorschaltgerät nach Anspruch 3, dadurch gekennzeichnet, daß in der Verbindung zwischen dem Spannungswandler (D, BS) und der Zündeinrichtung (Z), die die Zündhilfsspannung leitet, ein dritter Meßwiderstand (R3) angeordnet ist.

5. Vorschaltgerät nach Anspruch 4, dadurch gekennzeichnet, daß die Verbindung zwischen dem dritten Meßwiderstand (R3) und der Zündeinrichtung (Z) mit der Sicherheitseinrichtung (S) verbunden ist und daß die Sicherheitseinrichtung (S) eine Zündstromermittlungseinrichtung (ZI) aufweist, die mit der Auswerte- und Schalteinrichtung (A) verbunden ist.

6. Vorschaltgerät nach Anspruch 5, dadurch gekennzeichnet, daß der Spannungswandler (D, BS) ein DC/DC-Wandler (D) ist, daß der DC/DC-Wandler (D) eine zweite Ausgangsklemme (K2) aufweist, an der die Lampenversorgungsspannung anliegt, daß der DC/DC-Wandler (D) eine dritte Ausgangsklemme (K3) aufweist, an der die Zündhilfsspannung anliegt, daß der DC/DC-Wandler (D) eine erste Ausgangsklemme (K1) aufweist, die das Bezugspotential für die Lampenversorgungsspannung und die zündhilfsspannung aufweist, daß die erste Ausgangsklemme (K1) mit dem ersten Meßwiderstand (R1) und der Fehlerstromermittlungseinrichtung (FI) der Sicherheitseinrichtung (S) verbunden ist.

7. Vorschaltgerät nach Anspruch 6, dadurch gekennzeichnet, daß die zweite Ausgangsklemme (K2) mit einer Lampenspannungsermittlungseinrichtung (LU) der Sicherheitseinrichtung (S) verbunden ist.

8. Vorschaltgerät nach Anspruch 7, dadurch gekennzeichnet, daß die dritte Ausgangsklemme (K3) mit einer Zündhilfsspannungsermittlungseinrichtung (ZU) der Sicherheitseinrichtung (S) verbunden ist.

9. Vorschaltgerät nach Anspruch 8, dadurch gekennzeichnet, daß in der Verbindung zwischen dem DC/DC-Wandler (D) und der Zündeinrichtung (Z) ein Wechselrichter (BS) angeordnet ist.

10. Vorschaltgerät nach Anspruch 9, dadurch gekennzeichnet, daß die dritte Ausgangsklemme (K3) des DC/DC-Wandlers (D) direkt mit der Zündeinrichtung (Z) verbunden ist.

11. Vorschaltgerät nach Anspruch 5, dadurch gekennzeichnet, daß der Spannungswandler (D, BS) ein Wechselrichter (BS) ist.

12. Vorschaltgerät nach mindestens einem der vorstehenden Ansprüche, dadurch gekennzeichnet, daß das von der Sicherheitseinrichtung (S) erzeugte Abschaltsignal das gesamte Vorschaltgerät dauerhaft bis zum nächsten Einschaltversuch abschaltet.

13. Vorschaltgerät nach mindestens einem der vorstehenden Ansprüche, dadurch gekennzeichnet, daß die Zündeinrichtung (Z) über ein abgeschirmtes Kabel (K) mit dem Spannungswandler (D, BS) verbunden ist.

## Claims

1. Ballast for high-pressure gas discharge lamps in motor vehicles, which is fed from a vehicle battery (B), the ballast having at least one voltage transformer (D, BS) which is connected to the vehicle battery (B) and the vehicle frame (M), generates a lamp supply voltage and/or an auxiliary ignition voltage and is connected in an electrically conductive fashion to an ignition device (Z) for igniting and operating high-pressure gas discharge lamps (GDL), characterized in that the lamp supply voltage and/or the auxiliary ignition voltage are generated by the voltage transformer (D, BS) with DC isolation from the battery voltage of the vehicle battery (B), in that the reference potential of the auxiliary ignition voltage and/or of the lamp supply voltage is connected to the vehicle frame (M) via a low-resistance first measuring shunt (R1), in that the measuring shunt (R1) is connected in an electrically conductive fashion to a safety device (S), in that the safety device (S) has a fault-current determining device (FI), in that the safety device (S) has an evaluation and switching device (A) which generates a switch-off signal when the fault-current determining device (FI) determines a prescribed fault current, and in that the safety device (S) is connected in an electrically conductive fashion to the voltage transformer (D, BS).

2. Ballast according to Claim 1, characterized in that a second measuring shunt (R2) is arranged in the connection between the voltage transformer (D, BS) and the ignition device (Z), which has the reference potential.

3. Ballast according to Claim 2, characterized in that the connection between the second measuring shunt (R2) and the ignition device (Z) is connected in an electrically conductive fashion to the safety device (S), and in that the safety device (S) has a lamp-current determining device (LI) which is connected to the evaluation and switching device (A).

4. Ballast according to Claim 3, characterized in that a third measuring shunt (R3) is arranged in the connection between the voltage transformer (D, BS) and the ignition device (Z), which conducts the auxiliary ignition voltage.

5. Ballast according to Claim 4, characterized in that the connection between the third measuring shunt (R3) and the ignition device (Z) is connected to the safety device (S), and in that the safety device (S) has an ignition-current determining device (ZI) which is connected to the evaluation and switching device (A).

6. Ballast according to Claim 5, characterized in that the voltage transformer (D, BS) is an DC/DC transformer (D), in that the DC/DC transformer (D) has a second output terminal (K2) at which the lamp supply voltage is present, in that the DC/DC transformer (D) has a third output terminal (K3) at which the auxiliary ignition voltage is present, in that the DC/DC transformer (D) has a first output terminal (Kl) which has the reference potential for the lamp supply voltage and the auxiliary ignition voltage, and in that the first output terminal (Kl) is connected to the first measuring shunt (R1) and the fault-current determining device (FI) of the safety device (S).

7. Ballast according to Claim 6, characterized in that the second output terminal (K2) is connected to the lamp-voltage determining device (LU) of the safety device (S).

8. Ballast according to Claim 7, characterized in that the third output terminal (K3) is connected to an auxiliary-ignition-voltage determining device (ZU) of the safety device (S).

9. Ballast according to Claim 8, characterized in that an inverter (BS) is arranged in the connection between the DC/DC transformer (D) and the ignition device (Z).

10. Ballast according to Claim 9, characterized in that the third output terminal (K3) of the DC/DC transformer (D) is directly connected to the ignition device (Z).

11. Ballast according to Claim 5, characterized in that the voltage transformer (D, BS) is an inverter (BS).

12. Ballast according to at least one of the preceding claims, characterized in that the switching-off signal generated by the safety device (S) switches off the entire ballast permanently until the next switching-on attempt.

13. Ballast according to at least one of the preceding claims, characterized in that the ignition device (Z) is connected to the voltage transformer (D, BS) via a screened cable (K).

## Revendications

1. Ballast pour lampes à décharge électrique haute pression dans des véhicules automobiles, qui est alimenté à partir d'une batterie de véhicule (B) et comprend au moins un convertisseur de tension (D, BS) relié à la batterie (B) et à la masse (M) du véhicule, qui génère une tension d'alimentation de lampes et/ou une tension auxiliaire d'allumage et est connecté à un dispositif d'allumage (Z) pour allumer et faire fonctionner des lampes à décharge haute pression (GDL), caractérisé en ce que la tension d'alimentation de lampes et/ou la tension auxiliaire d'allumage sont générées avec séparation galvanique par le convertisseur de tension (D, BS) à partir de la tension aux bornes de la batterie de véhicule (B), que le potentiel de référence de la tension auxiliaire d'allumage et/ou de la tension d'alimentation de lampes est relié à travers une première résistance de mesure (R1) à faible valeur ohmique à la masse (M) du véhicule, que la résistance de mesure (R1) est connectée à un dispositif de sécurité (S), que le dispositif de sécurité (S) comporte un dispositif de détermination de courant de défaut (FI), que le dispositif de sécurité (S) comporte un dispositif d'exploitation et de commutation (A) qui génère un signal d'arrêt lorsque le dispositif de détermination de courant de défaut (FI) détermine un courant de défaut prédéterminé et que le dispositif de sécurité (S) est connecté au convertisseur de tension (D, BS).

2. Ballast selon la revendication 1, caractérisé en ce qu'une deuxième résistance de mesure (R2) est agencée dans la liaison entre le convertisseur de tension (D, BS) et le dispositif d'allumage (Z), liaison qui présente le potentiel de référence.

3. Ballast selon la revendication 2, caractérisé en ce que la liaison entre la deuxième résistance de mesure (R2) et le dispositif d'allumage (Z) est connectée au dispositif de sécurité (S) et que le dispositif de sécurité (S) comporte un dispositifde détermination de courant de lampe (LI) qui est relié au dispositif d'exploitation et de commutation (A).

4. Ballast selon la revendication 3, caracté risé en ce qu'une troisième résistance demesure (R3) est agencée dans la liaison entre leconvertisseur de tension (D, BS) et le dispositif d'allumage (Z), liaison qui conduit la tension auxiliaire d'allumage.

5. Ballast selon la revendication 4, caracté risé en ce que la liaison entre la troisième résistance de mesure (R3) et le dispositif d'allumage(Z) est reliée au dispositif de sécurité (S) et que ledispositif de sécurité (S) comporte un dispositifde détermination de courant d'allumage (ZI) qui est reliéau dispositif d'exploitation et de commutation (A).

6. Ballast selon la revendication 5, caracté risé en ce que le convertisseur de tension (D,BS) est un convertisseur continu/continu (D), quele convertisseur continu/continu (D) présente une deuxièmeborne de sortie (K2) à laquelle est appliquéela tension d'alimentation de lampes, que le convertisseurcontinu/continu (D) présente une troisième borne de sortie (K3) à laquelle est appliquée la tension auxiliaire d'allumage, que le convertisseur continu/continu (D) présenteune première borne de sortie (K1) qui présente le potentiel de réfé rence pour la tension d'alimentation de lampeset la tension auxiliaire d'allumage, et que la première bornede sortie (K1) est reliée à la premièrerésistance de mesure (R1) et au dispositif de détermination de courant dedéfaut (FI) du dispositif de sécurité (S).

7. Ballast selon la revendication 6, caracté risé en ce que la deuxièmeborne de sortie (K2) est reliée à un dispositif de détermination de tension de lampes (LU) du dispositif de sécurité (S).

8. Ballast selon la revendication 7, caracté risé en ce que la troisième borne de sortie (K3) est reliée à un dispositif de détermination de tension auxiliaire d'allumage (ZU) du dispositif de sécurité (S).

9. Ballast selon la revendication 8, caractérisé en ce qu'un onduleur (BS) est agencé dans la liaison entre le convertisseur continu/continu (D) et le dispositif d'allumage (Z).

10. Ballast selon la revendication 9, caractérisé en ce que la troisième borne de sortie (K3) du convertisseur continu/continu (D) est reliée directement au dispositif d'allumage (Z).

11. Ballast selon la revendication 5, caractérisé en ce que le convertisseur de tension (D, BS) est un onduleur (BS).

12. Ballast selon au moins une des revendications précédentes, caractérisé en ce que le signal d'arrêt, généré par le dispositif de sécurité (S), arrête durablement tout le ballast jusqu'à la prochaine tentative d'allumage.

13. Ballast selon au moins une des revendications précédentes, caractérisé en ce que le dispositif d'allumage (Z) est relié au convertisseur de tension (D, BS) par un câble blindé (K).
